# EUROPEAN PATENT APPLICATION

(11) **EP 2 975 908 A1**
(43) Date of publication of application: **20.01.2016**
(21) Application number: 15152150.7
(22) Date of filing: 22.01.2015
(51) Int. Cl.: H05B 33/08, H05B 37/02

(54) **Lighting device**

(30) Priority: 18.06.2014 JP 2014125794; 18.06.2014 JP 2014125795
(71) Applicant: Toshiba Lighting & Technology Corporation, Yokosuka-shi Kanagawa 237-8510 (JP)
(72) Inventor: Saito, Junko, Kanagawa, 237-8510 (JP); Noguchi, Yoko, Kanagawa, 237-8510 (JP); Kikuta, Sayaka, Kanagawa, 237-8510 (JP)
(74) Representative: Awapatent AB

(57) **Abstract**

According to one embodiment, a lighting device 1 includes a light emitting unit 13 used for illumination, an information acquisition unit 11 configured to acquire predetermined information, and a projecting unit 2 configured to project an image including the acquired predetermined information in accordance with light on and off control of the light emitting unit 13.

## Description

### FIELD

Embodiments described herein relate generally to a lighting device.

### BACKGROUND

Recently, a lighting device having a projecting device is proposed. For example, a lighting device to which a projecting device is attached is proposed and the lighting device has control means for controlling to associate an image which is projected by the projecting device with a light scene matching ambience of the image and enables to make space effects obtained by matching illumination light and a projected image.

A color adjusting lighting device which detects outdoor ambience and can perform illumination in order to make a space have the most pleasant ambience also is proposed.

However, the lighting device to which the projecting device is attached does not have a function to provide information needed by a person in accordance with behavior of the person.

### BRIEF DESCRIPTION OF THE DRAWINGS

FIG. 1 is a diagram illustrating arrangement in a room in which a lighting device with a projecting device is disposed, and a communication relationship between the lighting device and other apparatuses, according to a first embodiment.
FIG. 2 is a block diagram illustrating the lighting device according to the first embodiment.
FIG. 3 is a block diagram illustrating a lighting device with a projecting device according to a second embodiment.
FIG. 4 is a diagram illustrating a state in which the lighting device in FIG. 3 is arranged in a room.
FIG. 5 is a table illustrating an example of projection control information stored in a memory in FIG. 3.
FIG. 6 is a flowchart illustrating an operation in the embodiment.
FIG. 7 is a block diagram illustrating a modification example.
FIG. 8 is a diagram illustrating a state in which a lighting device in FIG. 7 is arranged in a room.
FIG. 9 is a diagram illustrating a state in which a lighting device is arranged in a room in the other modification example.
FIG. 10 is a table illustrating projection unit information stored in a memory in the other modification example.

### DETAILED DESCRIPTION

A lighting device according to the embodiment includes a light emitting unit used for illumination, an information acquisition unit configured to acquire predetermined information, and a projecting unit configured to project an image including the acquired predetermined information in accordance with light on and off control of the light emitting unit.

The information projected by the projecting unit is changed in accordance with a time zone.

The information acquisition unit is a communication unit communicating with an external apparatus and the information is acquired by communicating with the external apparatus through the communication unit.

The information is acquired in accordance with a timing at which the light emitting unit is subjected to the light on and off control.

The information is operating state information of other apparatus.

The lighting device further includes a position detection unit configured to detect a position of a person and a control unit configured to control a projection direction of the projecting unit to be a direction in accordance with the position of the person detected by the position detection unit.

The lighting device further includes the projecting unit in plurality, a position detection unit configured to detect a position of a person, and a control unit configured to select one of the plurality of projecting units in accordance with the position of the person detected by the position detection unit and to control a projection direction of the selected projecting unit to be a direction in accordance with the position of the person.

The control unit causes the projecting unit to project an image based on information in accordance with the position of the person.

Hereinafter, the embodiment will be described with reference to the drawings.

### (First embodiment)

### (Configuration)

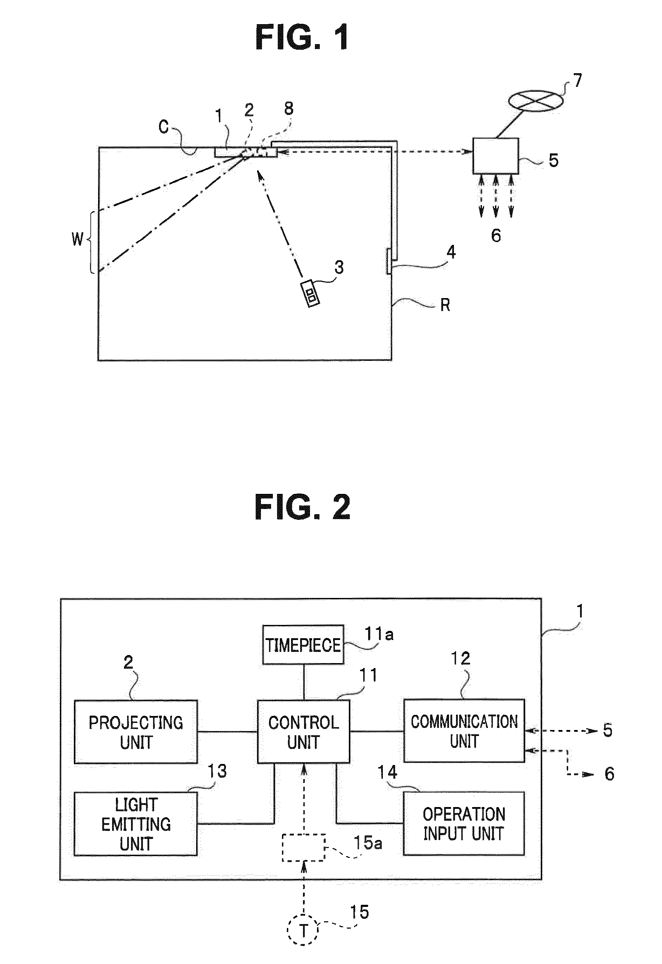

FIG. 1 is a diagram illustrating arrangement in a room in which a lighting device with a projecting device is disposed, and a communication relationship between the lighting device and other apparatuses, the lighting device according to a first embodiment.

The lighting device 1 is disposed on a ceiling, a wall, or the like of a room, a porch, and the like in a house. The lighting device 1 includes a projecting unit 2 serving as a projecting device.

The projecting unit 2 includes a projection direction adjustment mechanism so as to be able to adjust a projection direction. The projecting unit 2 adjusts a projection direction of an image in advance such that the image is projected at a predetermined location such as a wall surface, a floor surface, a ceiling surface, and the like.

In FIG. 1, a projection direction of the projecting unit 2 in the lighting device 1 fixed to a ceiling C is adjusted and set such that the projecting unit 2 projects an image on an area W of one wall in a room R.

Light on and off control for illumination of the lighting device 1 may be performed by a person such as an occupant operating a remote controller 3. The light on and off control means to switch ON and OFF of illumination or to change a degree of dimming resulting in weakening of light or increase the degree of dimming. The Light on and off control for illumination may also be performed by a wall switch 4 connected to the lighting device 1 through a signal line.

A plurality of lighting devices 1 are disposed in a house, and each of the lighting devices 1 is connected to a gateway device 5 for communication.

The gateway device 5 is also connected to other lighting devices or the other apparatus group 6 other than the lighting device. The gateway device 5 is configured to be able to acquire operating state information of each apparatus. The other apparatus group 6 includes an air conditioner in a room, a household electric appliance such as a rice cooker, a key of a door and the like. The gateway device 5 may acquire information on a setting state of a rice cooker, an operating state of an air conditioner and the like, a locking state of the door of an entrance, or the like.

The gateway device 5 may be connected to the Internet 7 serving as a communication line.

In FIG. 1, the gateway device 5 is a device independent from the lighting device 1. However, a function of the gateway device 5 may be included in one of the plurality of lighting devices 1 such that one lighting device 1 having a function of the gateway device 5 functions as a host apparatus of the other devices 1 and the like to acquire information on a state of the light on and off control for illumination.

FIG. 2 is a block diagram illustrating a configuration of the lighting device 1. The lighting device 1 is configured to include a projecting unit 2, a control unit 11, a communication unit 12, a light emitting unit 13 for illumination, and an operation input unit 14.

The projecting unit 2 emits image data transmitted from the control unit 11 to project the image data on the predetermined area W of a wall under control of the control unit 11. Image data of an image which is to be projected on the predetermined area W of the wall by the projecting unit 2 is supplied from the control unit 11 to the projecting unit 2.

The control unit 11 includes a control circuit configured to control the light emitting unit 13 in accordance with an operation signal for the light on and off control when the operation signal for the light on and off control is received from the remote controller 3 through the operation input unit 14 and to execute a preset operation. Specifically, an operation of acquiring predefined information is executed. The predefined information may be acquired, for example, by the control unit in accordance with the light on and off control for illumination. In this case, the control unit 11 includes an information acquisition unit configured to acquire the predefined information in accordance with ON or OFF of the light emitting unit 13. The control unit 11 projects an image including the acquired predefined information in accordance with the light on and off control for illumination. The predefined information may be acquired at a preset time. The predefined information may be acquired at a constant interval.

The control unit 11 executes a process corresponding to a command signal from the gateway device 5. For example, when the control unit 11 receives a transmission request command signal from the gateway device 5 through the communication unit 12 and the transmission request command signal is for a state indicating whether or not the light emitting unit 13 emits light, that is, a state of the light on and off control for illumination, the control unit 11 transmits information indicating the state of the light on and off control for illumination to the gateway device 5. When a control command signal for the light on and off control for illumination is received from the gateway device 5, the control unit 11 switches the state of the light on and off control for illumination.

A timepiece circuit 11a is connected to the control unit 11, and the control unit 11 may acquire time information. Thus, the lighting device 1 has a function using the time information of the timepiece circuit 11a. For example, the lighting device 1 has a wake-up timer function for turning ON illumination at a preset time. The control unit 11 may acquire information at wake-up time by using the wake-up timer function. For example, when the wake-up time is set to six o'clock, the control unit 11 may access the gateway device 5 at 5:50 and acquire predefined information. With this, new information may be projected at a timing of the wake-up time at which illumination turns ON.

The communication unit 12 includes a wireless communication function and communicates with the gateway device 5. The gateway device 5 is connected to the Internet 7 and may acquire various pieces of information using the Internet 7. For example, the gateway device 5 may acquire information from a server which provides schedule information of transport facilities such as a train, weather information including a climate, temperature, humidity or the like through the Internet, for example. In other words, the communication unit 12 is a communication circuit configured to communicate with the gateway device 5 serving as an external apparatus. The communication unit 12 constitutes the information acquisition unit which acquires predefined information by communicating with the external apparatus.

The light emitting unit 13 for illumination includes a plurality of light emitting diodes (referred to as a LED below) and performs illumination at a predefined area (here, a room R) in a predefined direction.

The operation input unit 14 is a circuit configured to receive a light on and off control operation signal from the remote controller 3 used for operating the lighting device 1 and to output the received signal to the control unit 11.

The light on and off control such as ON and OFF control or dimming control of the lighting device 1 may be performed by a person operating the remote controller 3. The lighting device 1 projects an image including predefined information at the predefined area W of a wall by using the projecting unit 2 in accordance with the light on and off control operation signal for illumination from the remote controller 3. Accordingly, the projecting unit 2 projects the image including the acquired predefined information.

Information projected and displayed by the projecting unit 2 of the lighting device 1 is set in the control unit 11 of the lighting device 1 as setting information.

The control unit 11 includes a storage unit. The control unit 11 causes setting information associated with information to be displayed by the projecting unit 2 to be stored in the storage unit in accordance with the light on and off control for illumination of the lighting device 1. In this case, information to be acquired is set for each lighting device 1 by using the remote controller 3. The setting may be performed by using a general-purpose portable terminal device or a terminal device. The general-purpose portable terminal device includes a smart phone on which dedicated application software is installed in advance, an operating terminal device having a communication function, and a PC tablet. The terminal device includes a dedicated setting device and the like.

Information displayed by the projecting unit 2 of the lighting device may be set in the gateway device 5. In this case, setting information is stored in a storage unit of the gateway device 5, for example.

When receiving, for example, a light on and off control operation signal for illumination as an information transmission request command signal from the lighting device 1, the gateway device 5 acquires information which is set in advance relating to a room in which the lighting device 1 is disposed in accordance with the light on and off control operation signal. The gateway device 5 transmits the acquired information to the lighting device 1 which transmitted the light on and off control operation signal.

The information displayed by the projecting unit 2 may be text data or image data which is set by using a terminal device of a user. For example, a text or an image as a reminder such as "lock the door", "switch off an electric kettle", "have **", and "don't forget **" may be projected. In this case, information to be displayed may be stored in the gateway device 5 in advance or may be stored in the lighting device 1. Storing of information in the lighting device 1 enables predefined information to be projected without communicating with the gateway device 5 or the other apparatuses.

An example of an operation of the above-described lighting device 1 will be described.

The lighting device 1 may inform a person of information which the person wishes to know by displaying the information through the projecting unit 2 in accordance with the light on and off control for illumination of the lighting device 1.

Information displayed by the projecting unit 2 of the lighting device 1 changes depending on a location in a house at which the lighting device 1 is disposed.

An example of information displayed, for example, when the lighting devices 1 are disposed at a bedroom and at a porch will be described below.

### 1) Lighting device at the bedroom

### a) When going to bed

People may wish to confirm that an illumination apparatus at other rooms in a house turns off or that a front door is locked, for example.

If a person causes the lighting device 1 of the bedroom to turn off or to dim down as the light on and off control, the control unit 11 performs turning OFF of the illumination, that is, turning off of the light emitting unit 13 and transmits an information transmission request command signal CA to the gateway device 5 in order to acquire predefined information IA and to transmit the acquired information IA to the lighting device 1 of the bedroom. The information transmission request command signal CA includes information regarding predefined information IA to be acquired by the gateway device 5 or predefined information IA needed to be transmitted to the lighting device 1 by the gateway device 5. Accordingly, the gateway device 5 may specify information to be required by the lighting device 1 which transmitted the information transmission request command signal CA, based on the information transmission request command signal CA. The gateway device 5 transmits the predefined information among stored pieces of information in response to the information transmission request command signal CA when the predefined information IA is stored in advance. The gateway device 5 obtains the predefined information from the outside by receiving the information transmission request command signal CA when the predefined information is necessary to be obtained from the outside.

The predefined information IA refers to information on a light on and off control state of other lighting devices 1 respectively disposed at other locations in the house, a locking state of a key at a front door and the like and the predefined information IA refers to information to be displayed when illumination is off or dimmed.

The gateway device 5 transmits a command signal CAB for transmitting information on the light on and off control state for illumination to other lighting devices 1 when the information transmission request command signal CA is received. When the command signal CAB is received, the other lighting device 1 transmits information indicating the light on and off control state for illumination to the gateway device 5.

The gateway device 5 transmits a command signal CAC for transmitting locking state information of key to a key device at the front door. The key device transmits information indicating a locking state of the key to the gateway device 5 when the command signal CAC is received.

The gateway device 5 transmits the acquired information on the light on and off control state of the other lighting devices 1 and the locking state of the key to the lighting device 1 in the bedroom which transmitted the information transmission request command signal CA.

A control unit 11 of the lighting device 1 in the bedroom generates image data for a screen on which the light on and off control state of the other lighting device 1 and the locking state of the key are displayed, based on the received information. The control unit 11 of the lighting device 1 in the bedroom outputs the generated image data to the projecting unit 2. Since the projecting unit 2 projects an image based on image data received from the control unit 11, the person can recognize and confirm the light on and off control state for illumination in other rooms and the locking state of the key immediately.

If a person causes the lighting device 1 of the bedroom to turn off or to dim down, the lighting device 1 of the bedroom acquires information regarding a light on and off control state for illumination in other rooms as the predefined information and displays the acquired information through the projecting unit 2. As a result, the person can prevent forgetting of causing the illumination to turn off and forgetting of causing the key to be locked.

If an image is displayed by the projecting unit 2 for a predefined time, for example, 10 seconds, the control unit 11 stops outputting of an image signal to the projecting unit 2. The projecting unit 2 displays an image no more.

A camera 8 (indicated by a dot line in FIG. 1) may be mounted in the lighting device 1 and the control unit 11 may include, for example, a function as follows: movement of a person is detected from an image obtained by capturing of the camera 8; and an operation, that is, a predefined gesture is determined to cause illumination forgotten to turn off to turn off or dim.

For example, the control unit 11 generates a command signal in accordance with an operation determined based on an image obtained by capturing of the camera 8, for example, a command signal for causing a lighting device forgotten to turn off to turn off or dim. The control unit 11 transmits the generated command signal to the gateway device 5. The gateway device 5 transmits a command signal to a lighting device pointed out by the command signal and causes the lighting device to execute to turn off or dim.

In this manner, a person can remotely cause illumination forgotten to turn off to turn off or to dim or cause the key to be locked.

The lighting device 1 of the bedroom also performs light on and off control during the daytime in some cases. Accordingly, a sleeping time zone, for example, a time period from 22 o'clock to 24 o'clock may set in advance and display may be executed by the above-described projecting unit 2 when illumination turns off or dims in the time zone.

If a plurality of lighting devices 1 have function to enable to directly communicate with each other instead of communicating with each other through the gateway device 5, the lighting device 1 of the bedroom may request directly other lighting devices 1 for the light on and off control state for illumination and acquire the light on and off control state of illumination when illumination turns off or dims. If the lighting device 1 may also communicate with the key device, the lighting device 1 may acquire directly information on a locking state from the key device.

As described above, information needed by a person is projected in accordance with a timing at which the light emitting unit 13 turns off or dims, for example, a sleeping timing of a person. The projected information refers to operating state information of other apparatuses and includes information on the light on and off control state of the one or more lighting devices 1 which are disposed at locations other than a location at which the lighting device 1 is disposed. The information needed by a person is acquired in accordance with the timing at which the light emitting unit 13 turns OFF, for example, the sleeping timing of a person. However, the information needed by a person may be information stored in advance in the lighting device 1 or the gateway device 5. In addition, the information needed by a person may be information collected by the lighting device 1 or the gateway device 5, for example, at each predefined time or when a state of an apparatus changes.

### b) In waking up

People may wish to confirm weather information of the day, schedule information of a train at the time, or the like when waking up.

Thus, the lighting device 1 causes the projecting unit 2 to display the weather information and the like when illumination turns ON based on the wake-up timer function at a preset time. The lighting device 1 of the bedroom transmits the information transmission request command signal CB for transmitting predefined information IB to the lighting device 1 to the gateway device 5, in order to cause the projecting unit 2 to display the weather information and the like at a preset time. The information transmission request command signal CB also includes information regarding the predefined information IB to be acquired by the gateway device 5, similarly to the information transmission request command signal CA. The gateway device 5 may specify information needed by the lighting device 1 which transmits the information transmission request command signal CB, based on the information transmission request command signal CB.

The predefined information IB refers to the latest information of the weather information, the schedule information of a train, traffic information or the like. The predefined information IB is displayed when the illumination turns ON.

If the information transmission request command signal CB is received, the gateway device 5 accesses one or more predefined sites through the Internet 7 to acquire the weather information and the like.

For example, when turning ON of the illumination at seven o'clock is set by a person using the wake-up timer function, when it is seven o'clock, the illumination turns ON and simultaneously an image including predefined information is projected on the area W of a wall from the projecting unit 2.

The control unit 11 transmits the information transmission request command signal CB to the gateway device 5 and causes the gateway device 5 to acquire predefined information through the Internet 7 and to transmit the acquired information to the lighting device 1 of the bedroom prior to a predefined time, for example, several minutes or tens of seconds before seven o'clock which is a set time. As a result, when it is seven o'clock, the illumination of the lighting device 1 turns ON and simultaneously information including the weather information and the like is displayed on the wall by the projecting unit 2.

Thus, since the weather information and the like is displayed on the predefined area W of a wall as information needed by a person in waking up, there is a convenience.

For example, the schedule information of a train and the like and the traffic information may be acquired from a predefined time prior to a time set by using the wake-up timer function. When a train is delayed for a predefined time or more or when an area of a predefined distance is congested due to bad weather, illumination may turn ON and information may be displayed through the projecting unit 2 at a time prior to the set time.

For example, when a wake-up time is set to seven o'clock, the control unit 11 transmits information transmission request command signal CB to the gateway device 5 from a predefined time, for example, one hour prior to the set wake-up time and acquires the schedule information and the like to check information from earlier time.

Information to be displayed by the projecting unit 2 may be obtained by a temperature sensor or a humidity sensor in the house. As illustrated with dot lines in FIG. 2, a temperature sensor 15 is connected to the lighting device 1 through an interface 15a. The control unit 11 causes the projecting unit 2 to display a temperature value detected by the temperature sensor 15. Thus, the interface 15a constitutes an input unit for inputting information on temperature.

The weather information of a region at which a working space is positioned may be acquired and displayed in addition to the weather information of a region at which the house is positioned. That is, the weather information of at least two regions which are different from each other may be acquired and displayed together.

Which local weather information is acquired, of which route of which railroad company schedule information is acquired, and whether or not congested information of a specified road is acquired are set in advance in the control unit 11.

Since the lighting device 1 of the bedroom performs the light on and off control during the daytime in some cases. Accordingly, a waking time zone, for example, a time period from six o'clock to eight o'clock may set in advance and display may be executed by the above-described projecting unit 2 when illumination turns ON in the time zone.

In this manner, a person can know necessary information when waking up.

As described above, information to be displayed by the projecting unit 2 changes in accordance with the light on and off control for illumination of the lighting device 1 in the bedroom.

As described above, information needed by a person is projected in accordance with a timing at which the light emitting unit 13 turns on or the degree of dimming increases from a dimmed state, for example, at a waking timing of a person. The information needed by a person may be acquired in accordance with a timing at which the light emitting unit 13 turns on or the degree of dimming increases from a dimmed state, for example, a waking timing of a person. Information to be acquired includes at least one of the weather information or traffic information or information obtained from the temperature sensor and the humidity sensor.

### 2) Lighting device at a porch

People may wish to confirm, for example, that illumination of each room turns off or is dimmed when going out. That is, they wish to confirm if they have not forgotten to turn off an electric apparatus and the like.

When the lighting device 1 of a porch turns off or is dimmed, the projecting unit 2 of the lighting device 1 displays a light on and off control state of the lighting device 1 in each room of the house. For this reason, the lighting device 1 of the porch transmits an information transmission request command signal CC to the gateway device 5. The information transmission request command signal CC is for transmitting information IC indicating the light on and off control state of the respective lighting devices 1 to the lighting device 1. The information transmission request command signal CC also includes information regarding the predefined information IC to be acquired by the gateway device 5, similarly to the information transmission request command signal CA.

The predefined information IC may be information regarding an electric apparatus in the house as a target. For example, the predefined information IC may include information on a control state of a household electric appliance such as a rice cooker in addition to information on light on and off control states of all of the lighting devices 1. Whether operating state information of a household electric appliance is acquired is set in the control unit 11 in advance by a person.

The gateway device 5 acquires information on the light on and off control state from other lighting devices 1 in the house when the information transmission request command signal CC is received.

Thus, since information on the light on and off control state of illumination in each room and the like is displayed on the predefined area W of a wall as information needed when going out, it is convenient that a person can confirm if he/she has not forgotten to turn off the illumination. If a state of the household electric appliance can be confirmed, for example, a state of an apparatus such as a rice cooker, a washing machine, and the like which may be allowed to be in an ON state can be confirmed to be in the ON state.

The control unit 11 stops outputting of an image signal to the projecting unit 2 such that an image displayed by the projecting unit 2 is not displayed for a time exceeding a predefined time, for example, 10 seconds.

If the plurality of lighting devices 1 have a function to communicate with each other, the lighting device 1 of the porch may request directly other lighting devices 1 for the light on and off control state and acquire the light on and off control state for illumination, when illumination turns off or dims. If the lighting device 1 may also communicate with the household electric appliances such as a rice cooker, the lighting device 1 may acquire directly information on a turning on and off control state from the household electric appliances.

If the gateway device 5 grasps a state of an electric apparatus such as the lighting device and the household electric appliance in advance, information on the grasped state may be transmitted instead of confirming the state again when the information transmission request command signal CC is received.

Information to be displayed may be text data or image data which is input and stored in the lighting device 1 or the gateway device 5 through the terminal device by a user in advance.

The information displayed by the projecting unit 2 of the lighting device 1 at the porch may be changed in accordance with a time zone.

As described above, information needed by a person is acquired in accordance with a timing at which the light emitting unit 13 turns off or dims, for example, a going out timing of a person. The acquired information refers to operating state information of other apparatuses and includes, for example, information on the light on and off control state of the one or more lighting devices which are disposed at locations other than a location at which the lighting device 1 is disposed.

According to the embodiment, in accordance with movement of a person, a lighting device which is able to provide information needed by the person can be provided.

The above-described gateway device 5 may be a router which is connected to a communication line such as the Internet and enables to transmit and receive data.

In the embodiment, an operation signal for the light on and off control of illumination is input to the control unit 11 of the lighting device 1, the lighting device 1 acquires preset information, and an image including information is displayed through the projecting unit 2. However, the operation signal for the light on and off control with respect to the lighting device 1 may be collectively input to the gateway device 5 through the lighting device 1.

In this case, the gateway device 5 transmits the acquired information to the lighting device 1 which transmits the operation signal for the light on and off control of the illumination.

As described above, according to the lighting device of the embodiment, it is convenient that information needed by a person is displayed when the person needs information.

### (Second Embodiment)

In a lighting device of the first embodiment, if a person does not move to a location at which a projection screen can be seen, the person cannot see the projected information. Accordingly, in a second embodiment, a lighting device will be described in which projection information can be used effectively by detecting a position of a person and controlling a projection direction of projection light based on a detection result. In the lighting device of the second embodiment, similarly to the first embodiment, information needed by a person can be displayed when the person needs information.

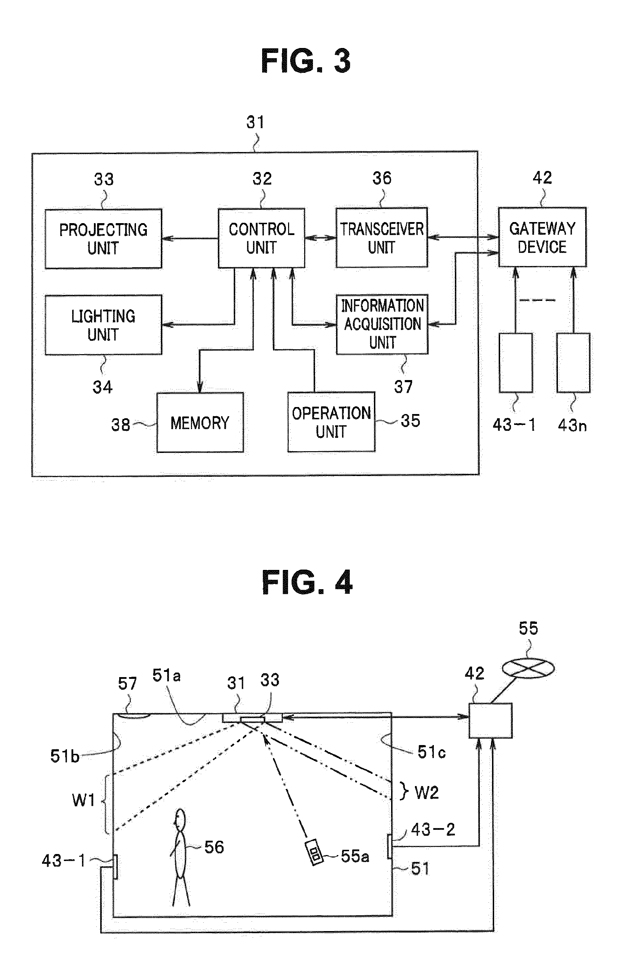

FIG. 3 is a block diagram illustrating the lighting device to which a projecting device is attached, according to the second embodiment. FIG. 4 is a diagram illustrating a state in which the lighting device in FIG. 3 is arranged in a room.

The lighting device 31 is disposed, for example, on a ceiling 51a in a room 51, as illustrated in FIG. 4. A position at which the lighting device 31 is disposed is particularly not limited. The lighting device 31 may be disposed on walls 51b and 51c or the like in the room 51 and may be disposed on a surface of a floor. As long as projection can be performed on a predefined projection area at a position, the lighting device 31 may be disposed outside the room.

The lighting device 31 is connected to a gateway device 42 and may acquire various pieces of information through the gateway device 42. The lighting device 31 may acquire information directly from a camera or a person detection sensor which is used as a position detection unit, a television receiver, a video decoder, an Internet router, and the other apparatuses, instead of acquiring information through the gateway device 42. For example, the camera or the person detection sensor may be configured integrally with the lighting device 31 and the lighting device 31 may acquire person detection information directly.

In FIG. 3, the lighting device 31 includes a control unit 32 configured to control each unit of the lighting device 31. A projecting unit 33 is controlled by the control unit 32 and projects predefined projection light. The control unit 32 may project light with constant intensity, a predefined image, or the like as the projection light. In the embodiment, the projecting unit 33 may project the projection light with a relative wide angle and may form a wide projection screen including the walls 51b and 51c in the room 51.

In the embodiment, the control unit 32 limits a range of projection to be a portion of the entire projection range of the projecting unit 33 in accordance with a position of a person. Accordingly, the control unit 32 may control the projection direction and the projecting unit 33 may project the projection light on only an area (referred to as a projection area below) of a portion of the entire projection screen. The position of a person may be detected by, for example, cameras 43-1, 43-2, ..., 43n as a position detection unit. In an example of FIG. 4, the respective cameras 43-1 and 43-2 are disposed in the vicinity of the wall 51b on one side in the room 51 and in the vicinity of the wall 51c on an opposite side. When one camera can capture all areas in the room 51, only one camera may be disposed in the room 51. When the camera 43 is disposed on the ceiling 51a, the camera 43 is preferably disposed integrally with the lighting device 31 or the camera 43 is preferably disposed in the vicinity of the lighting device 31. The camera 43 may be disposed integrally with the lighting device 31 or disposed in the vicinity of the lighting device 31 in order to transmit and receive information to and from the lighting device 31 directly. In this case, a driving power source may be configured to be secured from the lighting device 31. The camera 43-1 and 43-2 detect a person approaching a predefined range and can output capturing results to the gateway device 42. The gateway device 42 is configured to output a capturing result of the cameras 43-1 and 43-2 or the camera 43n (also referred to representatively as camera 43 below) as person position information to the lighting device 31.

The lighting device 31 includes a transceiver unit 36. The transceiver unit 36 outputs the capturing result of the camera 43 received from the gateway device 42 to the control unit 32. The control unit 32 can detect a position of a person by performing image processing on the capturing result of the camera 43. Image processing may be performed on the capturing result from the camera 43 in the gateway device 42 and information on a position of a person may be given to the control unit 32 as the person position information. The person position information may be output from the camera 43 by using, for example, a face recognition function of the camera 43. In addition, movement of a person may be analyzed by using an image recognition function and behavior of a target person may be estimated.

As a device for detecting a position of a person, a person detection sensor such as a sensor for detecting an infrared ray, a distant sensor, and an acoustic sensor may be employed. For example, person detection sensors are disposed at multiple locations in the room 51, a person approaching the person detection sensor is detected, and a detection result is given to the control unit 32 as the person position information. The camera and the person detection sensor may be used together. For simple description, when any one of the camera and the person detection sensor is used, a case in which the camera or the person detection sensor detects a position of a person and outputs a detection result will be described.

The gateway device 42 may receive information needed by the lighting device 31 from various apparatuses to output the received information to the lighting device 31. For example, the gateway device 42 may output information received through the Internet 55 or from a television receiver, a video decoder, or the like (not illustrated).

The lighting device 31 includes an information acquisition unit 37. The information acquisition unit 37 may acquire desired information from the gateway device 42 under control of the control unit 32 and output the information to the control unit 32. The control unit 32 controls the projecting unit 33 in order to project the projection light from the projecting unit 33 based on information acquired by the information acquisition unit 37 or information stored in a memory 38. The operation unit 35 may receive an operation of a user. Information to be projected by the projecting unit 33 may be specified by the user operating the operation unit 35. FIG. 4 illustrates an example in which a portable terminal 35a such as a remote controller, a smartphone, and a PC tablet is employed as the operation unit 35, for example.

The lighting device 31 includes an illumination unit 34 for irradiating the entirety inside the room 51. The illumination unit 34 performs irradiation with illumination light under control of the control unit 32.

In the embodiment, the control unit 32 sets the projection area based on a detection result of the camera 43 and causes the projection light to be projected on the set projection area. Accordingly, the control unit 32, for example, may cause the projection light to be projected on a projection area W1 which is a portion of the wall 51b of FIG. 4 or cause the projection light to be projected on a projection area W2 which is a portion of the wall 51c. Information to be projected may be a static image or a moving image.

In the embodiment, information to be projected may be set in advance in accordance with a position of a person, that is, the projection area, or in accordance with a mode set by a user. The control unit 32 may store projection control information which is setting information for such a projection control in the memory 38 in accordance with a user operation.

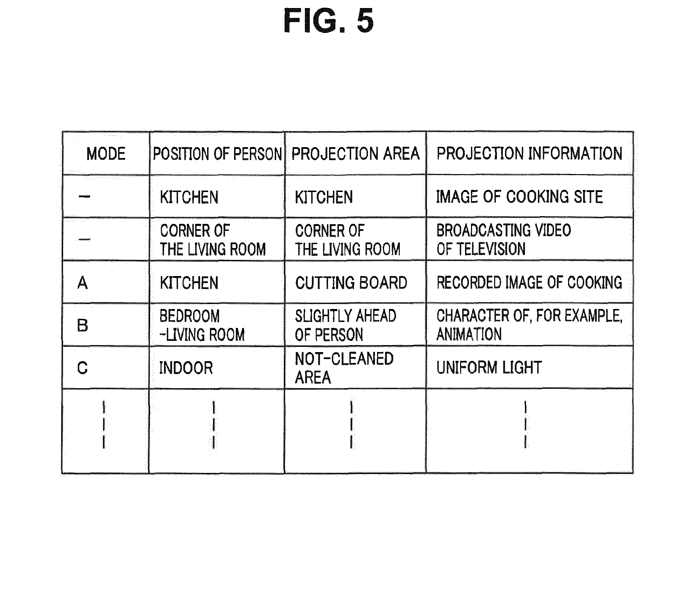

FIG. 5 is a table illustrating an example of the projection control information stored in the memory 38. In FIG. 5, two examples in which information is set in accordance with a position of a person are included. For example, FIG. 5 illustrates an example in which when a person in a kitchen is detected by the camera 43, the control unit 32 instructs the gateway device 42 of downloading a preset cooking site over the Internet 55 and an image acquired from the cooking site is projected as the projection light. The cooking site refers to, for example, a website opening a recipe of cooking or making procedures of cooking to the public, a URL of a server storing various pieces of information regarding cooking, or the like. When a person is in the kitchen, if at least the projection area is set, contents of the projection information may be set by separate means. For example, the camera 43 may access a cooking site by a gesture of a person and project an image of the cooking site after a position of the person is specified. In addition, the lighting device may include a sound recognition device and the lighting device may access a predefined website or a predefined URL by using sound. With this, necessary information can also be projected on a predefined position during working in which a hand is wet without touching an electronic apparatus or the like. For example, cooking can be performed while a necessary recipe is displayed by using sound or a gesture. A camera (not illustrated) provided in, for example, the kitchen may recognize the gesture. The camera captures movement of the person and supplies the capturing result to the control unit 32 of the lighting device 31 through the gateway device 42. The control unit 32 may detect the movement of the person from a captured image and change information to be projected. For example, detection of a motion (gesture) in which the person causes the hand to move right and left also allows information of a next page in the cooking site to be displayed. When a person is in the kitchen, a location to be projected and details to be projected may be changed in accordance with working details. For example, when a person is in front of a cooking utensil such as a cooking stove, a recipe or making procedure may be displayed on a wall surface. In addition, when a person is in a working space in which a cutting board is placed, a sample of a work may be projected on a working stand or the cutting board in a moving image manner.

In accordance with a reproduction state of an image to be projected, a notification function of generating light or sound may be added. For example, when a page of a site is turned for each working procedure of cooking, when working procedures proceed in order, and when a demonstration video of cooking is projected, if the cooking is almost completed, control, for example, notifying a person in other rooms that the cooking is almost completed may be performed.

"Corner of the living room" in FIG. 5 indicates a position at which a screen of a television receiver disposed in a room is unlikely to be seen. For example, when the person at the position (corner of the living room) at which screen of a television receiver is unlikely to be seen is detected by the camera 43, the control unit 32 sets a corner of the living room seen at a position of a person as the projection area in advance, acquires a broadcasting video of a television from the television receiver through the gateway device 42, and displays the broadcasting video which is projected as the projection light on the projection area. Accordingly, for example, a broadcasting video of a television can also be watched at a location at which only sound is heard, for example.

In the example, a position at which screen of the television receiver is seen may be registered, instead of registering a position at which the screen of the television receiver is unlikely to be seen and when a person at a position other than the registered position is detected, the position may be set as a position on which a broadcasting video is projected.

As information in accordance with a position of a person, for example, the size or the height of an image may be set. For example, when a person is close to a wall on which an image is projected, a small image may be projected. When a person is far from a wall on which an image is projected, a large image may be projected. When a person sits down, an image may be projected on a location of a low position. When a person stands up, an image may be projected on a location of a high position.

The projection area and the projection information may be set in accordance with movement of a person in addition to a position of the person. For example, estimating working details by the camera analyzing movement of a person may cause projection information in accordance with the working details to be projected on a projection area in accordance with the estimated working details.

A projection location and a projection direction may be controlled in accordance with information on movement, a position, a direction, and the like of a person. For example, an action scene is estimated from position detection information of a person. A projection location is determined by using an estimated action scene and the lighting device. As an example, when the position detection unit detects one person in a living room, one person in a kitchen, and no persons in a child's room, "before a meal" is estimated as the action scene and "kitchen" is set as a projection location. In this manner, several action scenes and projection locations and projection information may be set in advance, several action scenes may be estimated in accordance with the number of persons and a position of the person, and predefined information may be projected on a projection location corresponding to the estimated action scene.

FIG. 5 illustrates three examples in which information to be projected by a user designating a mode and a specific position of a projection area are specified. If a case in which a person is in a kitchen is set to Mode A, an area in which a user is set as a location at which a cutting board is to be disposed in the kitchen in which there is a person is set as a projection area and an image recorded in a video recorder (not illustrated) is reproduced, projected and displayed on the projection area in Mode A. At this time, a projecting location is set to a location appropriate for working and information to be projected is information associated with position information by a position of a person being the kitchen, for example, if the position information refers to a kitchen, the information is associated with cooking. Thus, the effect that a projection position is easily set and information to be projected is easily selected is expected. When a position of a person is a kitchen, a mode may be provided in which a projection area is set to a kitchen, projection information is set to a broadcasting video of a television.

As described above, different information is registered in the other mode setting on the same projection area. Thus, an image of desired information can be projected by a simple mode designation operation.

Mode B illustrates an example in which, for example, the projecting unit is disposed at other locations such as a bedroom or a corridor in addition to the inside of the room 51 of FIG. 4 and cooperation control with a projecting unit at the other location may be performed. For example, Mode B illustrates an example in which when a child is in a bedroom or the like, if Mode B is designated, a floor or a wall surface slightly ahead of a child in a direction toward a living room is set to a projection area and a character of an animation and the like is projected on the projection area. In this case, if a child moves, the projection area moves also. That is, Mode B has a function that causes guide light to be projected through the projecting unit 33 to guide a person.

Mode C illustrates an example in which the gateway device 42 uses information on an unclean area which is acquired from a clean robot (not illustrated). For example, when the clean robot cleans a predefined area, the clean robot stores an area which cannot be cleaned due to an obstacle and the like by the clean robot as the unclean area and the clean robot transmits information on the unclean area to the control unit 32. The information on the unclean area may be transmitted through the gateway device 42 or may be transmitted directly to the control unit 32 from the clean robot. For example, the control unit 32 sets an area which is in the vicinity of a person and is designated as the unclean area to be projection area and causes the projection light with, for example, uniformly high intensity to be projected on the projection area if the person in cleaning designates Mode C. With this, a person in cleaning can know an area at which cleaning is not performed by a cleaning robot in the vicinity of himself or herself. In this case, the control unit 32 may detect that a person causes a vacuum cleaner to turn ON and may control to automatically start to perform projecting.

In Mode B and Mode C, the lighting device 31 preferably includes a space grasp function for a room in which projecting is performed. For example, a projectable wall or a floor-shaped space is grasped by the camera 43 and thus a projecting direction for introducing can be set in advance. The projectable wall or the floor-shaped space refers to, for example, a relatively flat area without furniture or an obstacle.

The control unit 32 drives the projecting unit 33 in accordance with the projection control information when determining that a person is at a position ruled by the projection control information which is stored in the memory 38. The control unit 32 performs control based on a mode preferred to control based on a position of a person when the mode is designated by a user.

The projection area is set in advance corresponding to positions of all of the devices which can detect a position of a person in the room 51, for example, a position of the camera 43. The setting information is stored as initial information in the memory 38. When information regarding a position of the detected person is not set by the projection control information, the control unit 32 sets a projection area based on the initial information. In this case, information on a predetermined rule may be projected. In this case, the control unit 32 does not designate the mode ruled by the projection control information, and when it is determined that a person is not at a ruled position, information designated in advance is projected in accordance with a position of a person. The control unit 32 may or may not perform projecting when a person is not at a position which is designated by the mode.

The control unit 32 may control turning on of a lighting apparatus corresponding to projection control of the projecting unit 33. The control unit 32 outputs turning on control information to the gateway device 42 through the transceiver unit 36. The gateway device 42 controls turning on of the corresponding lighting apparatus based on the turning on control information. Accordingly, the control unit 32 causes illumination of the lighting apparatus in the vicinity of the projection area to turn off or become dark.

Position information of a person or information to be projected may be acquired directly by the lighting device 31 instead of acquiring the position information of a person or the information to be projected from the gateway device 42. In the embodiment, an example in which the projecting unit 33 is included in the lighting device 31 is described. However, the projecting unit 33 may be separately configured.

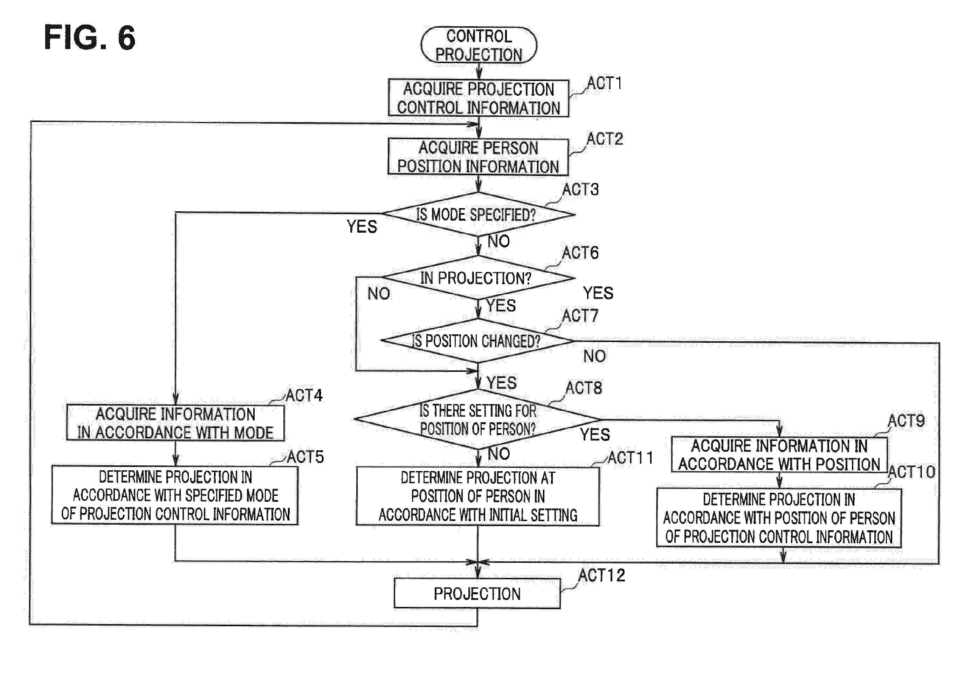

An operation of the embodiment having such a configuration will be described with reference to a flowchart in FIG. 6. FIG. 6 illustrates projection control by the control unit 32.

In Act S1 of FIG. 6, the control unit 32 read the projection control information from the memory 38. The control unit 32 acquires person position information, that is, a detection result of the cameras 43-1, 43-2, and 43-n through the transceiver unit 36.

The control unit 32 determines respectively whether or not a mode is designated by a user, whether or not projecting is performed, and whether or not setting regarding a position of the detected person is in the projection control information in Acts S3, S6, and S8. When the mode is not designated by a user, when projecting is not performed, and when setting regarding a position of the detected person is not in the projection control information, the process proceeds to Act S11. The control unit 32 determines a projection position based on the position of a person in accordance with the initial information in Act S11.

For example, as illustrated in FIG. 4, it is assumed that a person 56 is positioned in the vicinity of the wall 51b in the room 51. In this case, it is detected that the person 56 is positioned in the vicinity of the wall 51b by the camera 43-1. The transceiver unit 36 of the lighting device 31 receives the detection result through the gateway device 42 and the received detection result is supplied to the control unit 32. When a mode is not designated by a user and there is not projection control information regarding a position of the person 56, the control unit 32 outputs information set in advance in Act S11 to the projecting unit 33 and controls a projection direction by the projecting unit 33 such that a projection area is set to a projection area W1 which is a portion of the wall 51b. In this manner, predefined information is projected on the wall 51b which is easily seen by the person 56 (Act S12). The projection area W1 in this case is set by the initial information.

Though the person 56 perform no operation, the person 56 only move in a detection range of the camera 43-1 and thus predefined information, for example, a news program of a television broadcasting or the like can be automatically projected on the wall 51b which is easily seen by the person 56.

In this case, the control unit 32 generates turning on control information of a lighting apparatus 57 which is disposed in the vicinity of the projection area W1 and outputs the generated information to the gateway device 42 through the transceiver unit 36. The gateway device 42 causes the lighting apparatus 57 to, for example, turn off based on the turning on control information. Accordingly, an image projected on the projection area W1 can be easily seen.

It is assumed that the person 56 moves toward the wall 51c side while facing the wall 51c. If doing this, the person 56 which moves to the vicinity of the wall 51c is detected by the camera 43-2. The detection result is supplied to the lighting device 31 through the gateway device 42.

The control unit 32 acquires person position information at a predefined time interval (Act S2). The control unit 32 recognizes that the person 56 moves to a detection area of the camera 43-2 from a detection area of the camera 43-1. If it is determined that a mode is not designated by a user and a position of the person changes during projection in Act S6 and S7, the control unit 32 causes the process to proceed to Act S8 and determines whether or not setting regarding a detected position of the person is in the projection control information.

When there is not projection control information regarding a new position of the person 56, the control unit 32 outputs preset information to the projecting unit 33 and controls a projection direction by the projecting unit 33 such that a projection area is set to a projection area W2 which is a portion of the wall 51c, in Act S11. In this manner, predefined information is projected on the wall 51c which is easily seen by the person 56 (Act S12).

That is, though the person 56 performs no operation, the person only moves from a detection range of the camera 43-1 to a detection range of the camera 43-2 and thus predefined information, for example, a news program of a television broadcasting or the like can be automatically moved to and projected on the wall 51c which is easily seen by the person 56.

For example, a user is assumed to move to a kitchen. If doing this, a position of the user is detected by a camera (not illustrated) and person position information is supplied to the control unit 32. If it is determined that a mode is not designated by a user and a position of the person changes during projection in Act S6 and S7, the control unit 32 causes the process to proceed to Act S8 and determines whether or not setting regarding a detected position of the person is in the projection control information.

When the control unit 32 acquires the projection control information illustrated in FIG. 5, since information regarding the kitchen is in the projection control information, the control unit 32 causes the process to proceed to Act S9 from Act S8 and acquires the information regarding the kitchen. The control unit 32 controls the projecting unit 33 based on the information regarding the kitchen in Act S10. That is, in this case, the control unit 32 controls the information acquisition unit 37 to causes the information acquisition unit 37 to access the Internet 55 from the gateway device 42 and to download data of a preset cooking site. The control unit 32 controls a projection direction by the projecting unit 33 such that the kitchen is set to be a projection area and causes a downloaded image of the cooking site to be projected. In this manner an image of the cooking site is displayed in the kitchen.

That is, though the user performs no operation, the user only moves to the kitchen simply and thus an image of the cooking site can be automatically displayed in the kitchen.

For example, the person 56 in cleaning illustrated in FIG. 4 is assumed to operate the portable terminal 35a in the vicinity of the wall 51b and to designate Mode C. In this case, the control unit 32 determines whether Mode C is designated in Act S3 after acquiring position information of the person 56 in Act S2. The control unit 32 causes the process to proceed to Act S4 and acquires information in accordance with the mode from the projection control information.

For example, Mode C in the projection control information illustrated in FIG. 5 is set for projecting uniform light on a not-cleaned area. The control unit 32 controls the information acquisition unit 37 to transmit information on the not-cleaned area which is output from the gateway device 42 by a cleaning robot (not illustrated). The control unit 32 causes the projecting unit 33 to set a projection direction and projection information such that light with, for example, uniformly high intensity is projected on an area which is in the vicinity of the person 56 and designated as the not-cleaned area (Act S5). In this manner, the not-cleaned area in the vicinity of the person 56 is illuminated (Act S12). The person 56 can simply recognize the not-cleaned area of the cleaning robot by the illumination.

The person 56 is assumed to move toward the wall 51c side while facing the wall 51c. If doing that, the person 56 which moves to the vicinity of the wall 51c is detected by the camera 43-2. The detection result is supplied to the lighting device 31 through the gateway device 42. The control unit 32 acquires new position information of the person 56 (Act S2). Since a user sets Mode C, the control unit 32 sets the projecting unit 33 such that light with, for example, uniformly high intensity is projected on the not-cleaned area of the cleaning robot in the vicinity of a new position of the person 56, in Acts S4 and S5. In this manner, though the user performs no new operation, the user only moves simply and thus the not-cleaned area in the vicinity of a moved position is illuminated (Act S12).

In such an embodiment, a position of a person is detected and a projection direction of the projecting unit is determined in accordance with the detected position. Accordingly, regardless of the position of the person, a projection image can be displayed on a projection area which is easily seen by the person. Thus, a projection image can be seen at the new position (after the move) without the person performing a setting operation for a position to be projected and the like. Information to be projected which is associated with the position of the person is stored, the person only moves to the position, and thus information desired for the person can be displayed at a position at which the person easily sees the information. The mode is set as the projection control information and thus the position at which others see information instead of the person can be set to be the projection area or a position based on the position of the person and other position information can also be set to be the projection area.

In the embodiment, an example in which a position of a person is detected based on output of the camera or the person detection sensor and projection is controlled based on the detection result is described. However, a direction of a face of the person may be detected base on the output of the camera or the person detection sensor and projection may be controlled based on the detection result. That is, the position is replaced with information regarding the position of a person in the above description or the information regarding the position of the person is added and thus a projection direction of the projecting unit may be set in accordance with a direction of the person.

### (Modification example)

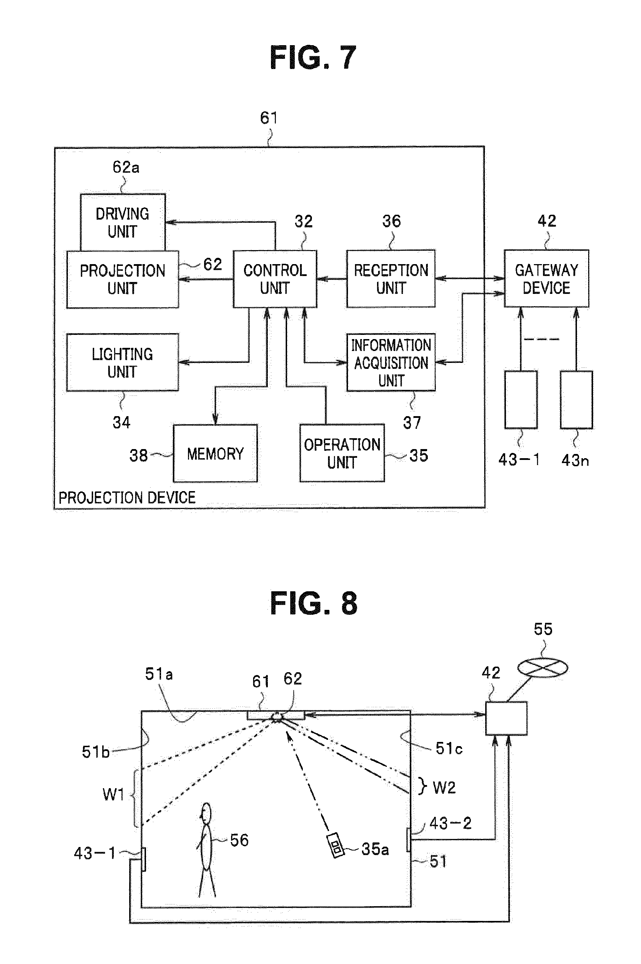

FIG. 7 and FIG. 8 are related to a modification example of the second embodiment where FIG. 7 is a block diagram illustrating the modification example and FIG. 8 is a diagram illustrating a state in which a lighting device in FIG. 7 is arranged in a room. In FIG. 7 and FIG. 8, the same components as the components in FIG. 3 and FIG. 4 are denoted by the same reference numerals and the descriptions thereof will be omitted.

A lighting device 61 in FIG. 7 is different from the lighting device 31 in FIG. 3 in that a projecting unit 62 and a driving unit 62a are employed instead of the projecting unit 33. The projecting unit 33 in FIG. 3 can perform projection with a wide angle. However, the projecting unit 62 in FIG. 7 has a relatively narrow projection range. The driving unit 62a causes the projecting unit 62 to rotate in a horizontal plane by using a driving mechanism (not illustrated) and causes a direction of the projecting unit 62 to change to a direction of an elevation angle. Thus, the projection direction can be changed. The driving unit 62a may be a unit able to change one of a rotation direction in the horizontal plane and the direction of the elevation angle. The driving unit 62a can change the projection direction of the projecting unit 62 under control of the control unit 32. The control unit 32 is similar to the lighting device 31 in FIG. 3 in that a projection area can be set by the entirety or a portion of a projection screen corresponding to the entire projection range of the projecting unit 62.

FIG. 8 illustrates that projection light can be projected on the projection area W1 which is a portion of the wall 51b or the projection light can be projected on the projection area W2 which is a portion of the wall 51c by the projecting unit 62 rotating in the horizontal plane.

Other configurations, acts and effects are the same as those in the second embodiment. A projecting unit having a projection range of a relatively wide angle may be employed as the projecting unit 62.

### (Modification Example)

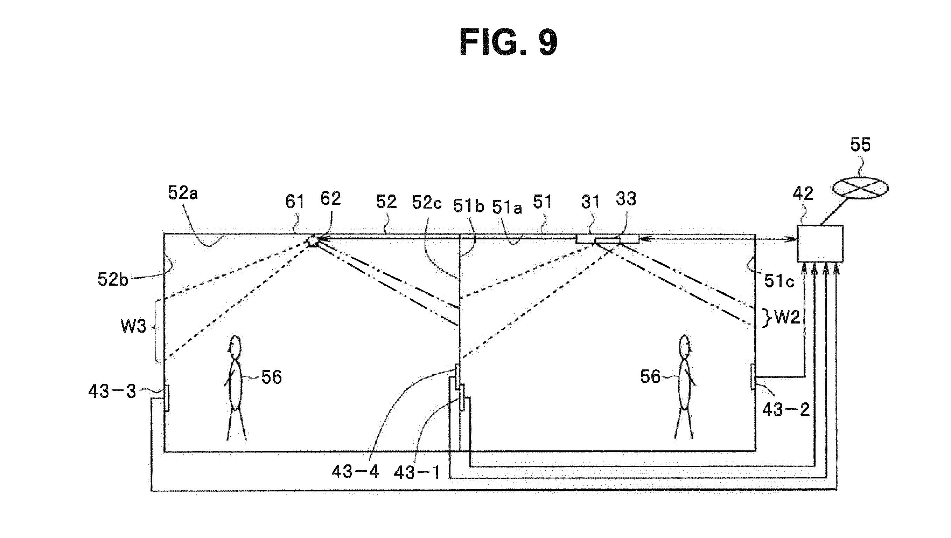

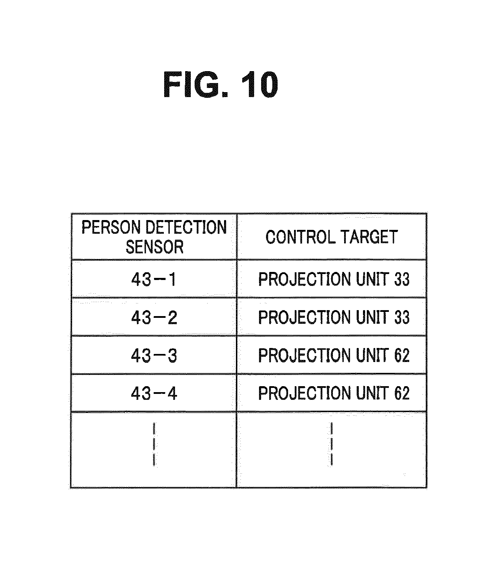

FIG. 9 and FIG. 10 are related to the other modification example where FIG. 9 is a diagram illustrating a state in which a lighting device is arranged in a room in the other modification example and FIG. 10 is a table illustrating an example of projection unit information stored in the memory 38 in the other modification example. In FIG. 9, the same components as components in FIG. 4 are denoted by the same reference numerals and the descriptions thereof will be omitted.

In the modification example, the lighting device includes the same configuration as the configuration in FIG. 3. The lighting device 31 in the modification example is different from the lighting device in the embodiment of FIG. 3 in that the lighting device 31 in the modification example supplies output of the control unit 32 to not only the projecting unit 33 but also the other projecting unit 62 and is configured in order to enable projection of a plurality of projecting units 33 and 62 to be controlled.

In FIG. 9, a room 52 is adjacent to the room 51. The projecting unit 62 is provided on the ceiling 52a in the room 52. A driving unit (not illustrated) controls the projecting unit 62 to change a direction of rotation in the horizontal plane and a direction of the elevation direction and thus the projection direction is changed. The control unit 32 of the lighting device 31 controls the driving unit and applies information on a projection image to the projecting unit 62. Accordingly, the projection direction and the projection image of the projecting unit 62 can be controlled.

The cameras 43-1 and 43-2 are respectively provided on the wall 51b and 51c in the room 51. The cameras 43-3 and 43-4 are respectively provided on the wall 52b and 52c in the room 52. The projection unit information indicating a corresponding relationship between the cameras 43 and the projecting units 33 and 62 is stored in the memory 38 of the lighting device 31.

FIG. 10 illustrates an example of the projection unit information in which the cameras 43-1 and 43-2 correspond to the projecting unit 33 and the cameras 43-3 and 43-4 correspond to the projecting unit 62. If the person position information is input based on output of the camera 43, the control unit 32 reads the projection unit information from the memory 38 and determines the projecting unit for controlling projection.

For example, when the person 56 is positioned in the vicinity of the wall 51c in the room 51, the person 56 is detected by the camera 43-2 and the control unit 32 controls the projecting unit 33 by using the person position information based on output of the camera 43-2. Thus, the projecting unit 33 projects and displays a predefined projection image, for example, an image of news on the projection area W2 which is a portion of the wall 51c and is easily seen by the person 56.

In this state, the person 56 is assumed to move to the room 52 in the vicinity of the wall 52b. If doing that, the person 56 is detected by the camera 43-3 and the control unit 32 stops projection of the projecting unit 33 by using the person position information based on output of the camera 43-3 and controls to drive the projecting unit 62 and the driving unit (not illustrated). Thus, the projecting unit 62 projects and displays a predefined projection image, for example, an image of news on the projection area W3 which is a portion of the wall 52b and is easily seen by the person 56.

According to the modification example, the plurality of projecting units performs cooperation control with each other. Accordingly, a desired projection image can also be projected at a position at which a person easily sees the image, for example, when the person moves to a room from a room.

While certain embodiments have been described, these embodiments have been presented by way of example only, and are not intended to limit the scope of the inventions. Indeed, the novel devices described herein may be embodied in a variety of other forms; furthermore, various omissions, substitutions and changes in the form of the devices described herein may be made without departing from the spirit of the inventions. The accompanying claims and their equivalents are intended to cover such forms or modifications as would fall within the scope and spirit of the inventions.

## Claims

1. A lighting device comprising:
a light emitting unit (13) used for illumination;
an information acquisition unit (11) configured to acquire predetermined information; and
a projecting unit (2) configured to project an image including the acquired predetermined information in accordance with light on and off control of the light emitting unit (13).

2. The device according to claim 1, wherein the information projected by the projecting unit (2) is changed in accordance with a time zone.

3. The device according to claim 1 or 2, wherein the information acquisition unit (11) is a communication unit (12) communicating with an external apparatus (5) and the information is acquired by communicating with the external apparatus (5) through the communication unit (12).

4. The device according to any one of claims 1 to 3, wherein the information is acquired in accordance with a timing at which the light emitting unit (13) is subjected to the light on and off control.

5. The device according to claim 4, wherein the information is operating state information of another apparatus (6).

6. The device according to any one of claims 1 to 5, further comprising:
a position detection unit (43) configured to detect a position of a person (56); and
a control unit (32) configured to control a projection direction of the projecting unit (33) to be a direction in accordance with the position of the person (56) detected by the position detection unit (43).

7. The device according to any one of claims 1 to 5, further comprising:
the projecting unit in plurality;
a position detection unit (43) configured to detect a position of a person (56); and
a control unit (32) configured to select one of the plurality of projecting units (33, 62) in accordance with the position of the person (56) detected by the position detection unit (43) and to control a projection direction of the selected projecting unit to be a direction in accordance with the position of the person (56).

8. The device according to claim 6 or 7, wherein the control unit (32) causes the projecting unit (33) to project an image based on information in accordance with the position of the person (56).
